# EUROPEAN PATENT APPLICATION

(11) **EP 4 560 950 A2**
(43) Date of publication of application: **28.05.2025**
(21) Application number: 24213489.8
(22) Date of filing: 18.11.2024
(51) Int. Cl.: H04L 1/00

(54) **TWO-PHASE RATE ADAPTATION FOR WLAN**

(30) Priority: 21.11.2023 US 202363601230 P
(71) Applicant: Acer Incorporated, New Taipei City 221 (TW)
(72) Inventor: WEI, Hung-Yu, 221 New Taipei City (TW)
(74) Representative: Haseltine Lake Kempner LLP

(57) **Abstract**

In one embodiment, a method (112) of configuring rate adaptation for data transmission, the method (112) including: for a first phase (114, PHS1): sending (16, 116) a set of test data packets; and determining (118) a first rate adaptation configuration based on feedback corresponding to the sending (16, 116) of the set of test data packets; for a second phase (120, PHS2): sending (22, 122) a set of application data packets according to the first rate adaptation configuration; and determining (124) a second rate adaptation configuration based on at least one of the sending (16, 116, 22, 122) of the set of test data packets or the set of application data packets.

## Description

### TECHNICAL FIELD

The present invention relates to wireless communications, and more particularly, to rate adaptation in wireless communications.

### BACKGROUND

Reducing latency for predictable traffic is important to ensure reliable communications and Quality of Service (QoS) enhancements. In an IEEE 802.11 based wireless system, an unlicensed spectrum is used for wireless communications. Contention in the shared wireless spectrum may result in excessive latency. To meet QoS requirements of a certain class of time-sensitive applications, it is important to manage the delivery latency of predictable data packets.

Therefore, a suitable transmission scheme may be proposed to avoid a long convergence time for next-generation IEEE 802.11 communications.

### SUMMARY

In one embodiment, a method of configuring rate adaptation for data transmission, the method comprising: for a first phase: sending a set of test data packets; and determining a first rate adaptation configuration based on feedback corresponding to the sending of the set of test data packets; for a second phase: sending a set of application data packets according to the first rate adaptation configuration; and determining a second rate adaptation configuration based on at least one of the sending of the set of test data packets or the set of application data packets.

These and other aspects of the invention will be apparent from and explained with reference to the embodiment(s) described hereinafter.

### BRIEF DESCRIPTION OF THE DRAWINGS

Many aspects of the embodiments of the present invention can be better understood with reference to the following drawings, which are diagrammatic. The components in the drawings are not necessarily to scale, emphasis instead being placed upon clearly illustrating the principles of the embodiments of the present invention. Moreover, in the drawings, like reference numerals designate corresponding parts throughout the several views.
FIG. 1 is a schematic diagram that shows an example two-phase rate adaptation method, in accordance with an embodiment of the invention.
FIG. 2A is a schematic diagram that shows an example expected transmission pattern using the two-phase rate adaptation method shown in FIG. 1, in accordance with an embodiment of the invention.
FIG. 2B is a schematic diagram that shows an enlarged view, and certain parameters, of one of the test plus application data packet transmissions from the expected transmission shown in FIG. 2A, in accordance with an embodiment of the invention.
FIG. 3 is a schematic diagram that shows an enlarged view, and certain parameters, of one of the test plus application data packet transmissions from the expected transmission pattern shown in FIG. 2A where the pre-transmission is delayed because of a busy channel, in accordance with an embodiment of the invention.
FIG. 4 is a schematic diagram that shows an example signaling flow for AP-controlled downlink data transmission using the two-phase rate adaptation method of FIG. 1, in accordance with an embodiment of the invention.
FIG. 5A is a schematic diagram that shows an example signaling flow for AP-controlled uplink data transmission using the two-phase rate adaptation method of FIG. 1, in accordance with an embodiment of the invention.
FIG. 5B is a schematic diagram that shows a variation of the example signaling flow of FIG. 5A, in accordance with an embodiment of the invention.
FIG. 6 is a schematic diagram that shows an example signaling flow for STA-controlled uplink data transmission using the two-phase rate adaptation method of FIG. 1, in accordance with an embodiment of the invention.
FIG. 7 is a schematic diagram that shows an example signaling flow for a pre-data transmission phase using plural, different modulation coding schemes (MCSs), followed by the application data packet transmission phase, in accordance with an embodiment of the invention.
FIG. 8 is a schematic diagram that shows an example communication system in which various devices may implement the two-phase rate adaptation method of FIG. 1, in accordance with an embodiment of the invention.
FIG. 9 is a schematic diagram that shows an example computational architecture for a wireless-capable device used in the communication system of FIG. 8, in accordance with an embodiment of the invention.
FIG. 10 is a flow diagram that shows an example two-phase rate adaptation method, in accordance with an embodiment of the invention.

### DETAILED DESCRIPTION OF EMBODIMENTS

Certain embodiments of a two-phase rate adaptation method (and device and system in which the method may be implemented) are disclosed that may improve the reliability and/or timeliness of certain wireless transmissions. In one embodiment, the two-phase rate adaptation method provides for rate adaptation configurations based on a set of test data packets sent during a pre-data transmission phase and on application data packets subsequently sent during a data transmission phase, where the rate adaptation configuration for the data transmission is based on the test data packets, the application data packets, or a combination of the test and application data packets.

Digressing briefly, and in general, rate adaptation (or sometimes referred to as link adaptation) is a mechanism in IEEE 802.11 based wireless systems that selects a transmission rate according to the current channel quality (e.g., based on the wireless channel conditions). Existing wireless-capable devices that use rate adaptation mechanisms for IEEE 802.11 based wireless systems transmit the application data packets and use rate adaptation modules that adjust the rate and other transmission parameters (e.g., modulation and coding scheme (MCS) (e.g., BPSK ½, QPSK ¾, etc.), guard interval (e.g., OFDM guard interval setting), spatial stream (e.g., multiple-in, multiple out (MIMO) configurations), channel bandwidth, etc.) based on channel conditions as determined from the response, or absence thereof, to the transmission (e.g., the response from a receiving device, such as an acknowledgement (ACK)). For instance, MCS tables are publicly available, such as found on websites SemFio networks (e.g., https://semfionetworks.com/blog/wi-fi-7-mcs-table/), or at https://mcsindex.net/, to name a few. As a simple illustration, if the channel quality is determined to be good, then high transmission rates may be used, and if the channel quality is determined to be poor, then lower, more robust transmission rates may be used. One popular rate adaptation algorithm is Minstrel, though others exist. In effect, existing systems and methods configure the rate adaptation based on feedback from the data transmissions, adjusting the rate over several rounds of trial and error. This approach may not be desired for certain applications, such as for certain office environments where high reliability and/or low latency of data transmissions within a Wireless Local Area Network (WLAN) communication system is important (e.g., emergency response center, gas utility service facility, etc.), or smart environments (e.g., for robot applications in a smart factory/manufacturing setting or the medical facility), among other applications involving high priority transmissions. In contrast, certain embodiments of a two-phase rate adaptation method may achieve the desired rate adaptation configuration before application data packets are actually delivered and/or speed-up the rate adaptation convergence time to improve reliability and/or timeliness in wireless transmissions. Through the application of a two-phase rate adaptation method, a reduction in the rate adaption convergence time and/or the waiting time for wireless channel access may be achieved.

Having summarized certain features of a two-phase rate adaptation method of the present disclosure, reference will now be made in detail to the description of a two-phase rate adaptation method as illustrated in the drawings. While a two-phase rate adaptation method will be described in connection with these drawings, there is no intent to limit it to the embodiment or embodiments disclosed herein. For instance, example implementations are illustrated that use three rounds of transmissions (e.g., one round including one or more test data packets during the pre-data transmission, corresponding pre-data transmission results, and one or more application data packets sent during the data transmission), with the understanding that a different quantity of transmission rounds (fewer or greater) may be implemented and hence are contemplated to be within the scope of the invention. Further, certain embodiments of a two-phase rate adaptation method are described or illustrated herein using a periodic transmission pattern. However, it should be appreciated within the context of the present disclosure that the data transmission patterns contemplated herein may generally be of the form of an expected data transmission patterns, whether periodic, predictable, and/or of a known or historical pattern. Also, though emphasis is on a wireless communication system environment that is embodied, in one example, as an office-based WLAN environment with one or more APs serving multiple wireless-capable devices (e.g., notebooks, tablets, phones, etc.), some examples are described below that have application to various smart environments (e.g., smart factory, hospital, or research facilities that may use specialized wireless-capable devices, such as robots). In other words, it should be understood by one having ordinary skill in the art, in the context of the present disclosure, that certain embodiments of a two-phase rate adaptation method may be used in multiple types of environments where the reliability and timeliness of data packet transmissions is important, and hence are contemplated to be within the scope of the disclosure. Further, although the description identifies or describes specifics of one or more embodiments, such specifics are not necessarily part of every embodiment, nor are all of any various stated advantages necessarily associated with a single embodiment. On the contrary, the intent is to cover alternatives, modifications and equivalents included within the principles and scope of embodiments of the disclosure as defined by the appended claims. For instance, two or more embodiments may be interchanged or combined in any combination. Further, it should be appreciated in the context of the present disclosure that the claims are not necessarily limited to the particular embodiments set out in the description.

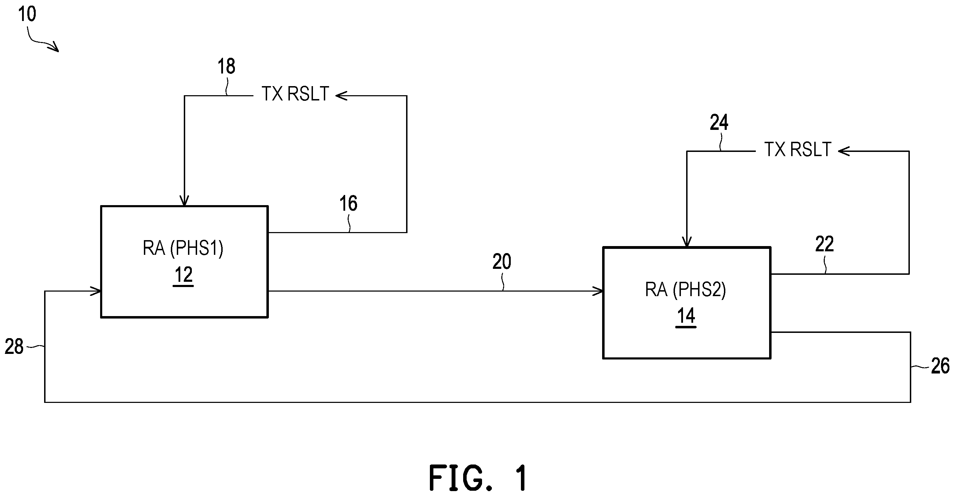

Before proceeding with the description of FIG. 1, a general summary of challenges in 802.11 based wireless communications is described. As wireless channel quality varies, link (or similarly, rate) adaptation mechanisms are applied. As described above, a set of transmission configuration schemes (e.g., including modulation and coding schemes) are defined in wireless communications systems. Based on the wireless link quality and/or the previous data transmission success/failure history, a wireless communication device may select a suitable transmission configuration with the rate adaptation mechanism. In some systems, ACK-based rate adaptation mechanisms (e.g., Minstrel) may be applied to IEEE 802.11 based wireless communications. Since ACK-based rate adaptation mechanisms rely on the previous success/failure data reception and the corresponding ACK messages, a suitable transmission scheme may be selected after several rounds of data transmission, which may lead to a long convergence time. The long convergence time of rate adaptation may result in reduced channel utilization and/or high transmission errors.

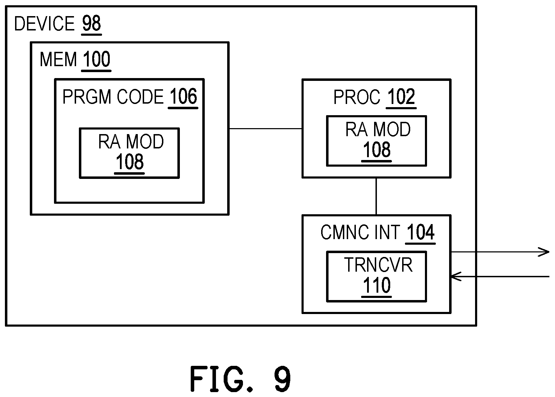

To describe one approach to addressing one or more of these or other challenges, attention is directed to FIG. 1. FIG. 1 shows an embodiment of an example two-phase rate adaptation method 10. The two-phase rate adaptation method 10 may be implemented on WLAN devices (e.g., WLAN access point, WLAN station, WLAN router and/or hotspot device) in a wireless (802.11-based) communication system, such as that shown in FIG. 9 and explained below. The rate adaptation may be conducted in two phases, shown in FIG. 1 as phase1 rate adaptation 12 (RA (PHS1)) and phase2 rate adaptation 14 (RA (PHS2)). Phase1 is also referred to herein also as a pre-data transmission phase, and phase2 is also referred to herein as a data transmission phase. During phase1, a set of test data packets are sent 16 to enable the sending device, based on feedback, to perform rate adaptation (e.g., for testing a better rate adaptation configuration (e.g., MCS setting, MIMO configuration, etc.)) for the subsequent, upcoming data transmission in phase 2. The set of test data packets may be data packets with an empty data payload, or with a small, dummy data payload (e.g., unimportant or meaningless data packet payload), where the sending of the test data packets 16 is intended to elicit a transmission result 18 (e.g., TX RSLT, which may include receipt or no receipt of an ACK) that may be used for determining a rate adaptation configuration. Reference herein to a set of test data packets (or set of application data packets) may include a single packet or plural packets.

Subsequent to the phase1 rate adaptation 12 (and the feedback associated with the transmission result 18) is the start of the data transmission phase 20, and in particular, the commencement/start of the phase2 rate adaptation 14. In the phase2 rate adaptation 14, application data packets (e.g., with a meaningful packet data payload) are sent 22 according to the rate adaptation performed in phase1, and/or after feedback associated with receiving a transmission result 24 (e.g., TX RSLT, which may include the presence or absence of an ACK) (i.e., possibly further adjusted based on the transmission result 24). In one embodiment, the application data packets include reliable (e.g., ultra-reliable) and/or low-latency application data. In some embodiments, the application data packets may include control messages that are used to control another device. The data transmission 22 (comprising one or more application data packets) in phase2 may be based on rate adaptation configured according to test data packets sent in phase1, application data packets sent in phase2, or a combination of test and application data packets from phase1 and phase2. The transmission of the application data packets completes a round of data transmission 26, which may result in a record 28 (of rate adaptation configuration from the last transmission round) for use in a next round of data transmissions according to phase1 and phase2 rate adaptation configurations.

Digressing briefly, and as explained briefly above, in existing 802.11 wireless communications, rate adaptation is only performed during the data transmission phase. For instance, a WLAN device configured with rate adaptation logic (e.g., module) may send (transmit) plural packets (e.g., five (5) packets), and receive a transmission result (e.g., ACK, or no response, depending on the channel conditions) for those corresponding sent packets. Based on the transmission result, the WLAN device may adjust the MCS, rate, etc. In contrast, certain embodiments of the two-phase rate adaptation method use two phases, phase1 and phase 2, for configuring the rate adaptation. For instance, when an important transmission is expected (e.g., to control a robot, a notebook/tablet or a cell phone), phase1 rate adaptation 12 is added to existing rate adaptation methodology, where test data packets (e.g., with empty or dummy payloads) are sent 16, preliminarily to the application data packet transmissions 22 of phase2, in what may also be referred to as a trial phase. These test data packets 16 enable the sending WLAN device, based on the transmission result 18, to adapt to a more suitable scheme before the data transmission phase (phase2). Notably, the phase1 rate adaptation 12 and phase 2 rate adaptation 14 are implemented in the same WLAN device, such as via rate adaptation module/logic (e.g., software and/or hardware). As explained above, the test data packets may be considered unimportant packets (e.g., are not used to control a device, such as a robot, a notebook/tablet or a cell phone), but rather, may be artificially generated, with empty or dummy (meaningless) payload data. Based on the transmission result 18 (e.g., based on receiving or not receiving an ACK from a receiving device), rate adaptation functionality in the sending WLAN device adjusts to a suitable rate adaptation configuration (e.g., a suitable MCS scheme for channel conditions, different rate, etc.), and then the data transmission phase 20 commences, where application data packets (e.g., in some instances, important, device-controlling packets) are sent 22 (and where based on the transmission result 24, rate adaptation may, possibly, again be adjusted). At the end of the data transmission phase 26 (completed round), the two-phase rate adaptation method 10 repeats itself.

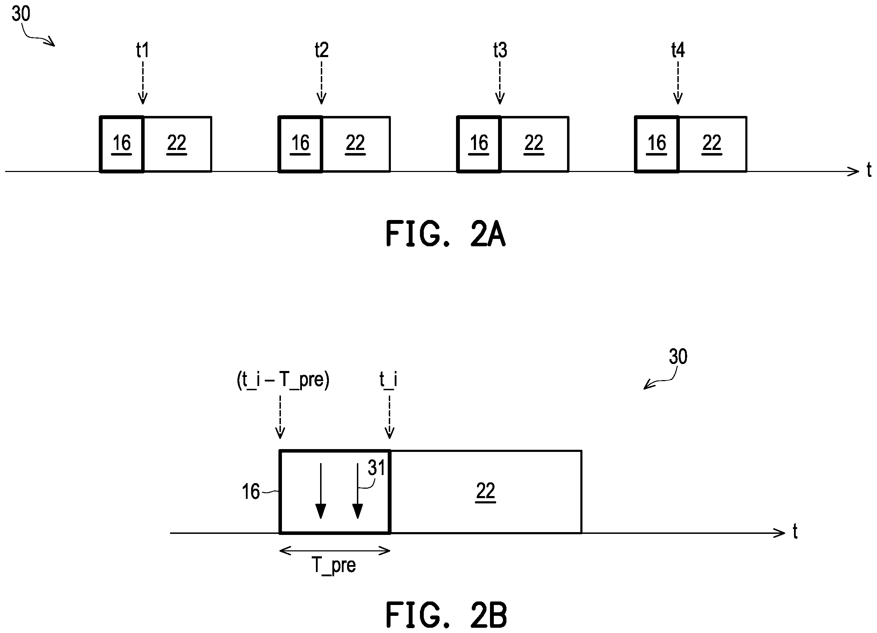

FIG. 2A shows an example expected (e.g. periodic) transmission pattern 30 using the two-phase rate adaptation method 10. The expected transmission pattern 30 is illustrated using four (4) rounds of data transmissions. For instance (and with continued reference to FIG. 1), beginning from the left in FIG. 2A, shown is a bolded block corresponding to transmission of a set of test data packets 16 based on the phase1 rate adaptation 12, and adjacent to that bolded block is another (un-bolded) block representing transmission of a set of application data packets 22 based on the phase2 rate adaptation 14. The first two blocks labeled 16 and 22 represent a first round of data transmissions (e.g., including the set of application data packets and the set of test data packets), and the following set of like-labeled, bolded/un-bolded blocks to the right of the first set of blocks along the time axis represent subsequent rounds of data transmissions with a total

in this example of four (4) rounds of data transmissions. Also shown above the blocks and approximately aligned with the start of the transmission of the application data packets are annotations signifying the expected arrival time (e.g., of the application data packets) from another device. Those annotations include an arrow and corresponding label, tx, where x = 1, 2, 3, or 4, and signifies the expected arrival times of the application data packets (e.g., from a computer, controller, or AP) at the WLAN device before being sent (at or around the arrival time) to communicate with (and possibly control) another device (e.g., a notebook, robot, etc.).

Explaining further, consider an example scenario where the application environment is an office having a plurality of distributed APs/routers controlled by a controller (e.g., main computer or server) and a plurality of wireless-capable devices (e.g., notebooks), where the plurality of distributed APs/routers may communicate with the plurality of notebooks by transmitting commands having application data packets via a wired/wireless WLAN. In some instances, all the devices in the wired/wireless WLAN may include the control algorithms, and hence there is no expected delivery of commands that are relayed to the wireless-capable devices (e.g., notebooks) at or about the delivery time. Further assume that the intent is to communicate to the, for instance, notebooks periodically (e.g., update a notebook every 100 milliseconds (msec)) via a respective round among four (4) rounds of data transmissions, with the first round beginning at or around t1, the second round beginning at or around t2, the third round beginning at or around t3, and the fourth round beginning at or around t4. For instance, in practice, the notebooks may receive the application data packets (e.g., commands) at or around t1, take an action, and then there is a delay while the notebook reacts, and then the next command (t2) is received (and transmitted), and so on to achieve a given control method. The ability to transmit the commands (application data packets 22) in a reliable and timely manner ensures effective control and action (e.g., in a time-sensitive manner). Further, it is important that the notebooks retain this timely and reliable operation in the midst of different channel conditions, and converge quickly to a suitable rate adaptation (e.g., without material delays encountered through prolonged trial and error). According to certain embodiments of a two-phase rate adaptation method, each transmission round involves two rate adaptation phases (phase 1 and phase2). In one embodiment, in the first phase (phase1), the respective set of test data packets are sent according to a pre-data transmission phase at a time immediately preceding the corresponding expected arrival time (e.g., t1, t2, t3, and t4) to enable preliminary adjustments to rate adaptation before starting the respective application data packet transmissions. Note that the example given above may substitute the notebooks with, for instance, robots, with similar effects.

FIG. 2B shows an enlarged view of one of the (sent) set of test data packets 16 plus set of application data packets 22 and some important parameters. In general, the pre-data transmission phase (phase1), comprising the transmission of the set of test data packets, may be of a duration equal to T_pre. In one scenario, given the expected (e.g., periodic) arrival (and data transmission phase starting) time of t_i, each pre-data transmission phase may begin before the arrival time at (t_i - T_pre). For instances where the pre-data transmission phase begins on time, a simple example is helpful to illustrate the mechanism. If the application data transmissions 22 (phase2) are to commence at 10 msec, and the pre-data transmission is configured to run for a duration of 1 msec, then the pre-data transmission phase (phase1) should run from 9 msec to 10 msec.

FIG. 2B also illustrates some additional configuration parameters. For instance, the downward arrows 31 within the block corresponding to the pre-data transmission phase represent the number of pre-data or test data packets (e.g., a quantity of two in this example, though other quantities may be used, including 3, 5, etc.). The configuration may also include one or more parameters that may be used for configuring a suitable (e.g., improved or optimal) MCS during the pre-data transmission phase (phase1), and includes one or any combination of T_pre, (t_i - T_pre), number of test data packets, time gap between the test data packets, and size (e.g., bytes) of each test data packet or size in the aggregate.

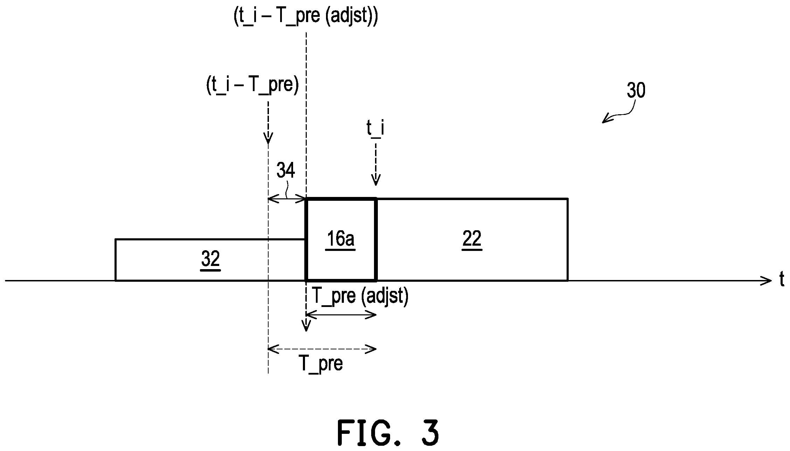

Though the examples corresponding to FIGS. 2A-2B are based on the pre-data transmission phase beginning on time (as expected, such as T_pre time before the arrival time, t), there are instances where the pre-data transmission time may be deferred (or prematurely terminated as described below). For instance, the pre-data transmission time may be deferred due to a busy channel (e.g., where there is an unfinished transmission by a nearby, channel-contending wireless device). FIG. 3 shows an enlarged view, and certain parameters, of one of the test plus application data packet transmissions from the expected transmission pattern shown in FIG. 2A, where the pre-data packet transmission is delayed because of a busy channel. As is known, wireless transmissions (e.g., transmissions complying with IEEE 802.11) use a shared channel, where multiple devices use the same spectrum. Accordingly, there may be contention among those devices for the same channel to occupy the channel for a while. Though FIG. 2A illustrates expected starting times for commencing the pre-data transmission phase, it should be borne in mind that other devices may be using the channel. FIG. 3 shows this latter situation as a channel busy time 32. The channel busy time 32 might extend over (encroach upon) the previously described (FIG. 2B) pre-data transmission phase commencement time of (t_i - T_pre) and beyond, such as from a neighboring WLAN device with an unfinished transmission. In the current standard (e.g., IEEE 802.11), an ongoing channel transmission is not interrupted. To avoid a collision or failed transmission, the commencement time of (t_i - T_pre) should be deferred until the channel is no longer busy (e.g., a neighboring WLAN device stops transmission). In this example, the pre-data transmission starting time is deferred by a certain amount of time 34 due to the channel busy time 32. Since it is important that the application data packets are delivered 22 as expected (e.g., at t_i, so that, for instance, the notebook (or robots, etc.) receive their commands on time), then the duration of the pre-data transmission goes from T_pre (FIG. 2B) to an adjusted (shortened) duration (T_pre(adjusted)). In other words, the pre-data transmission 16 shown in FIG. 2B is shortened to pre-data transmission 16a by the deferred amount of time 34, causing the start of the pre-data transmission phase to be delayed to (t_i - T_pre(adjusted)). Accordingly, the pre-data transmission period has a delayed start, but ends on time because the next data transmission (phase 2) should start as expected (t_i) to ensure reliability and timeliness in the delivery of application data packets (e.g., ensure the notebooks (or robots) receive their commands on time). Even though the channel busy time 32 causes a shorter pre-data transmission duration, the pre-data transmission is still used to find a better rate adaptation (e.g., MCS) for the data transmission.

In practice, the expected starting time for the pre-data transmission phase is configured, and when the channel is busy and encroaches upon the pre-data transmission phase starting time, the pre-data transmission starting time is deferred in an attempt to preserve the expected starting time for sending the application data packets.

Since the expected data transmission time (commencement of phase2) may be based on prediction, the WLAN device may receive the application data packets before the expected transmission is predicted to occur, enabling sooner-than-expected access to the channel. In such scenarios, and in some embodiments, pre-emption may be used, where the pre-data transmission phase may be shortened (e.g., prematurely terminated) in favor of an early delivery of the application data packets. In other words, the data transmission phase (phase2) pre-empts the pre-data transmission phase (phase1).

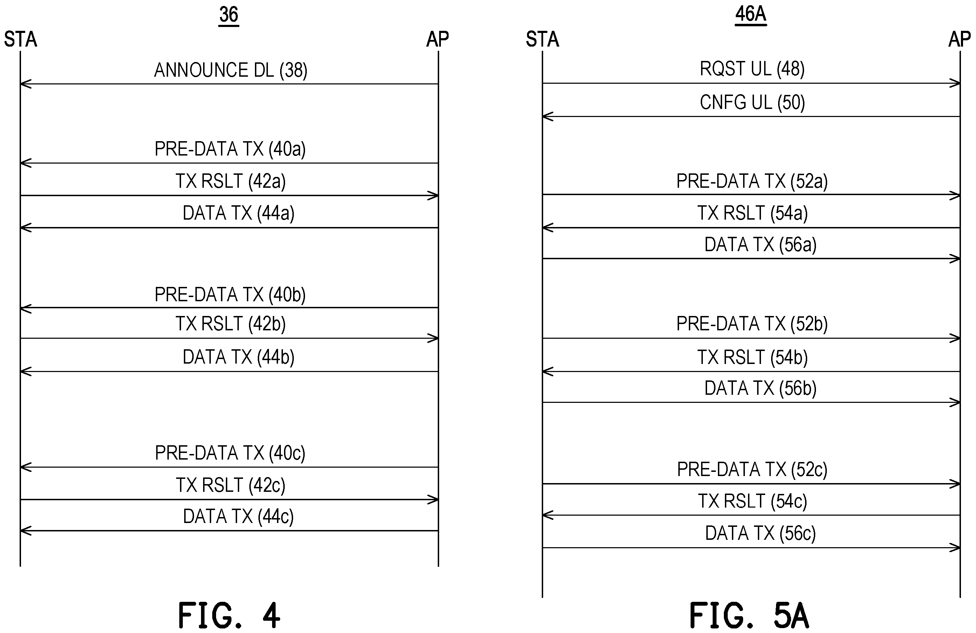

Having described features of certain embodiments of the two-phase rate adaptation method, attention is directed to FIGS. 4-8, which show various example signaling flows for uplink (UL) and downlink (DL) implementations using the two-phase rate adaptation method, based on a different situs of control. Each of the signaling flow diagrams show, at the top of the diagram, at least a station (STA) and an access point (AP) as transmitting and receiving devices of a wireless communication system. The AP may be a WLAN AP (e.g., an IEEE 802.11 AP), or a WiFi router, or a notebook or phone serving as a hot spot, among other devices. The station may be an IEEE 802.11 device, or more generally, a WLAN device, with an 802.11 WLAN radio interface, which may include a laptop, a notebook, a tablet, a mobile phone, or an IEEE 802.11 STA, among other devices. It is understood within the context of the present disclosure that the WLAN devices and/or WLAN AP may include rate adaptation logic (e.g., a hardware and/or software module), where rate adaptation may be conducted with two phases, as explained above. For instance, rate adaptation may be conducted in a pre-data transmission phase (phase1), where the pre-data packet transmission may be applied for testing a better rate adaptation configuration (e.g., MCS setting and/or MIMO configuration setting) for an upcoming data transmission. Additionally, rate adaptation may then be conducted in a data-transmission phase (phase 2).

Referring to FIG. 4, shown is an example signaling flow 36 for AP-controlled downlink (DL) data transmission using an embodiment of the two-phase rate adaptation method. As explained above, the AP may be an IEEE 802.11 access point (e.g., which in ordinary usage, may be a hot spot at home (e.g., a WiFi router at home) or a notebook functionally being a hotspot). More specific to one of the use cases described herein, the two-phase rate adaptation method may be implemented in more critical applications with higher reliability and/or latency standards, such as in an office environment or smart environment. The station may be an 802.11 device (e.g., 802.11 WLAN device). In this depicted scenario, the operation is initiated by the AP (i.e., AP-controlled). The application data packets are transmitted from the AP to the STA. Describing the example signaling flow 36, the AP may optionally announce a high-quality DL service 38 (announce DL), followed by, in this non-limiting example, three (3) sets (or rounds) of data transmissions (each round distinguished by the reference numeral suffices, a, b, and c for the first, second, and third rounds).

Digressing briefly, the AP has knowledge of the data traffic pattern and/or has the capability of configuring the data traffic pattern. In the case of a computer/server or controller initiating and then sending commands to the AP, the data transmission is expected to arrive at the AP in a set of pre-determined time points (which may include some minor delay variations), which may be embodied as periodic data traffic with a fixed time period between two data packets. In turn, the data traffic is expected to be transmitted from the AP to the STA. There exists one or more different mechanisms in which the AP may obtain information regarding the expected data traffic pattern, including being based on an application type in a packet header, based on an address of a source node and/or the address of the destination node, based on a QoS type indicated in the packet header, from a configuration message that is sent by an application server, and/or from a configuration message that is sent by a WLAN controller.

Continuing, in the first round, the AP transmits the pre-data transmission packets 40a (PRE-DATA TX). As explained above, when a data packet P_i is expected to arrive at the AP at a time t_i, the AP starts pre-data-transmission procedures before t_i. The starting time may be configured as (t_i - T_pre), where T_pre is a configurable parameter for the protocol operation. Also, the AP may start channel access contention at (t_i - T_pre), where the AP essentially attempts to gain the right to use the channel. If the channel contention is successful, the AP may become a TXOP (transmission opportunity) holder. Within the TXOP duration, the AP has the right to transmit. Whenever AP gets the right to use the channel, then this TXOP duration should cover the pre-transmission phase (phase 1) as well as the data transmission phase (phase 2) (while other devices cannot access the channel). The AP may transmit a set of (one or more) pre-data-transmission packets, where each of the pre- data-transmission packets may be configured as a data packet with a small dummy data payload, a data packet with an empty data payload, a null packet (e.g., Null data PPDU), or a control packet that requests a channel state measurement (e.g., a sounding PPDU). The AP may transmit multiple pre-data-transmission packets until the number of transmitted pre-data-transmission packets is equal to an upper limit packet number, N_max, the time used for pre-data-transmission is greater than or equal to a time threshold, T_max, or the application data (which is predicted to arrive at time t_i) has arrived at the AP. In some embodiments, the AP may (prematurely) terminate the pre-data-transmission phase and start the data transmission (e.g., pre-emption, as explained above).

The station responds (or does not respond) with a transmission result 42a (TX RSLT). For instance, the transmission result 42a may be an ACK and/or channel feedback. Note that reference hereinafter to transmission result, though typically explained below in the context of actually receiving an ACK, generally refers to using the presence or absence of an ACK as feedback to enable a determination of a rate adaptation configuration. Sometimes, in the pre-data transmission, some channel measurement (e.g., an indication of channel quality) or feedback is provided, which the STA can send to the AP. More specifically, the STA, upon receiving the pre-data transmission 40a, may respond with an ACK message, conduct channel measurements and report the channel state information to the AP, or respond with an ACK with piggybacked channel state information feedback (or as explained above, there may be instances, particularly in a low-quality channel, to not receive an ACK or other information).

Based on 40a and 42a, the AP performs rate adaptation (e.g., adjusts the MCS, etc.), which is then used for the (subsequent) data transmission 44a (DATA TX). For instance, the AP, upon receiving the ACK message and/or channel state information feedback from the STA, may conduct rate adaptation and select/re-select a suitable transmission configuration (e.g. modulation or coding scheme).

The AP then transmits the set of application data packets during a data transmission phase 44a.

This overall process (40, 42, and 44) is repeated for a second round of data transmissions (40b, 42b, and 44b), and then a third round of data transmission (40c, 42c, and 44c), in similar manner.

Note that during the optional announcement 38 (high-quality, DL service message) that precedes the pre-data transmission (transmission of test data packets) 40a, the AP informs the STA of certain features of the subsequent rounds of data transmissions. For instance, the announcement 38 may inform the STA that there is to be multiple rounds (e.g., three (3) rounds in this example) of these two-phase transmissions. The announcement 38 may also inform the STA of the starting time, the periods of those transmission rounds, etc., enabling the STA to know when to expect the pre-data transmission start and the data transmission start. Also, one or more of the parameters described in conjunction with FIG. 2B (e.g., duration of the pre-transmission phase, number of pre-transmission packets, etc.) may be configured within the announcement 38. In effect, the announcement 38 informs the STA of the rate adaptation configuration to be used in the two phases (phase1 and phase2).

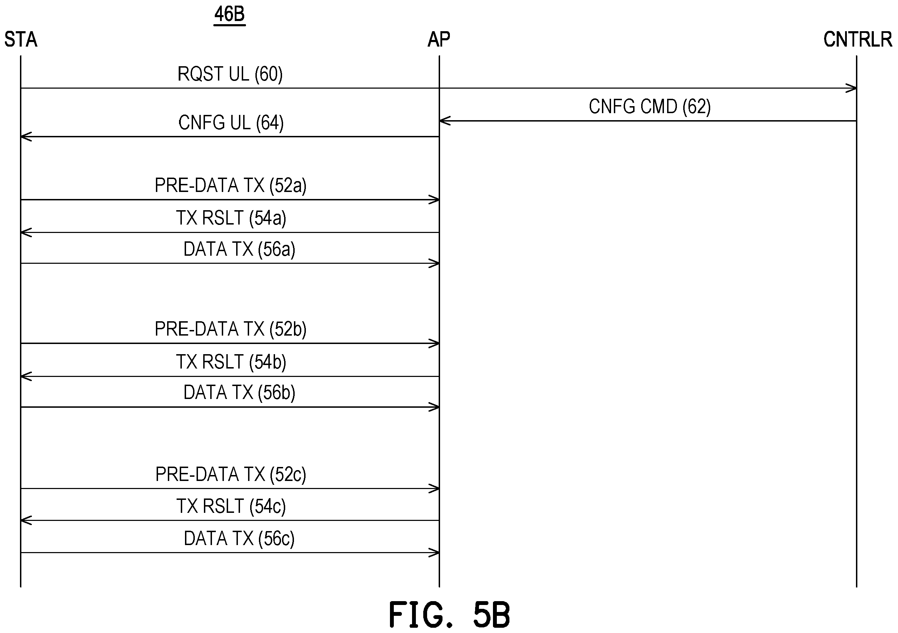

FIG. 5A shows an example signaling flow 46A for AP-controlled uplink (UL) data transmission using an embodiment of the two-phase rate adaptation method. FIG. 5B shows a variation of the signaling flow 46A of FIG. 5A and is denoted as signaling flow 46B. The signaling flow 46A of FIG. 5A shares similarities with the signaling flow 36 of FIG. 4. For instance, the signaling flow 46A is still controlled by the AP. However, the data transmission is from the STA to the AP (an UL transmission), versus the data transmission from the AP to the STA (DL transmission) in FIG. 4. Another similarity is that there are still three (3) rounds (though, as explained above, merely used as an illustrative example, where a different number of rounds may be used in some embodiments) of two-phase transmissions, each round possessing a similar concept to that described for the rounds in FIG. 4. In the AP-controlled uplink data transmission, the data traffic is expected to transmit from the STA to the AP. Note that uplink, ultra-reliable applications with uplink data to transmit may be found in some mission critical applications, where application data packets may need to be sent in a reliable and timely manner (e.g., alert messages, sensing data, etc.). The AP may have knowledge of the data traffic pattern, where the data transmission is expected to arrive at the AP in a set of pre-determined time points (with possibly some minor delay variations). For instance, the data transmission may follow a periodic data traffic pattern with a fixed time period between two data packets. As similarly described above for the signaling flow 36 of FIG. 4, the AP may obtain the information regarding the data traffic pattern in one or a combination of ways. For instance, the AP may determine the policies by itself (e.g., may be the source of the policies). In some embodiments, as reflected by the signaling flow 46B of FIG. 5B, the AP may receive a configuration message 62 (CNFG CMD) that is sent by a WLAN controller.

The AP may learn of the data traffic pattern in other or additional ways. For instance, the AP may learn of the data traffic pattern from the request 48 sent by the STA. With reference to the signaling flow 46A of FIG. 5A, the STA sends a request for high-quality uplink service to the AP 48 (RQST UL). This signaling message (request 48) informs the AP that in the next few data transmission rounds, the STA expects to report important information and hence a configuration for this type of service is requested. The STA informs the AP about the parameters of the expected traffic. For instance, the STA may send this control message to establish the high-quality service for predictable uplink data traffic. The control message may include a set of time points of the expected transmission time, an expected size of each data packet, a period of a periodic traffic flow, a starting time of this uplink data flow, an ending time of this uplink data flow, and/or a number of data packets for a periodic data flow.

The AP responds to the STA with a configuration of the high-quality uplink service 50 (CNFG UL). The configuration informs the STA about such parameters as the starting time, period, how long the pre-data transmission phase lasts, etc.

Thereafter, in a first round of data transmissions, the STA sends a set of test packets according to a pre-data transmission 52a (PRE-DATA TX in phase1). When a data packet P_i is expected to be generated at the STA at time t_i, the STA starts pre-data-transmission procedures before t_i. The starting time may be configured as (t_i - T_pre), where T_pre is a configurable parameter for the protocol operation. The STA may start channel access contention at (t_i - T_pre). If the channel contention is successful, the STA may become TXOP holder. The STA may transmit one or more pre-data-transmission packets, and those pre- data-transmission packets may include a data packet with a small dummy data payload, a data packet with an empty data payload, a Null packet (e.g., Null data PPDU), or a control packet that requests channel state measurements (e.g., a sounding PPDU).

The sending of the pre-data packets may elicit a transmission result 54a (e.g., TX RSLT, which may be the presence or absence of an ACK and/or channel feedback) from the AP (e.g., acknowledging that the set of packets were successfully received). For instance, upon receiving a pre-data-transmission, the AP may respond with an ACK message and/or conduct channel measurements, and report the channel state information to the STA. The AP may respond with an ACK with piggybacked channel state information feedback (or may not respond at all).

The STA performs rate adaptation (e.g., selection of a better MCS, etc.) based on 52a and 54a. For instance, upon receiving (or not receiving) the ACK message or/and channel state information feedback from the AP, the STA conducts rate adaptation and selects/re-selects the proper transmission configuration (e.g. MCS).

The STA sends a set of application data packets corresponding to an data transmission 56a (DATA TX) that is based on the rate adaptation performed on the basis of feedback from sending the test data packets. The STA may transmit multiple pre-data-transmission packets until the number of transmitted pre-data-transmission packets is equal to an upper limit packet number, N_max, the time used for pre-data-transmission is greater than or equal to a time threshold, T_max, the application data, which is predicted to arrive at time t_i, has arrived at the STA WLAN radio interface, or the STA may (prematurely) terminate the pre-data-transmission phase and start the data transmission. Through this process, the application (phase2) data transmission may be more reliable (than if rate adaptation was performed only during the data transmission phase). This two-phase rate adaptation repeats again for the second round of data transmissions (52b, 54b, and 56b) and the third round of data transmissions (52c, 54c, and 56c) in similar manner as performed for the first round of data transmission.

As mentioned above, FIG. 5B shows a variation of the signaling flow of FIG. 5A, with the addition of a controller. From one perspective, the AP of FIG. 5A may have functionality of the controller of FIG. 5B embedded within the AP (e.g., co-located), whereas in FIG. 5B, the functionality of the controller is carried out by a device that is separate from the AP. One example implementation environment may be an office or area with one or more APs covering/serving one or more wireless devices (e.g., notebooks, tablets, phones, etc.), or a large factory where there are multiple APs to cover a large area. Further, though the controller and the AP are physically separated, the basic operation as described in association with FIG. 5A (e.g., an AP-controlled UL data transmission, where the STA initiates this UL data transmission service) is largely the same for FIG. 5B, with some differences noted below. In the signaling flow 46B of FIG. 5B, a request for a high-quality uplink service 60 (RQST UL) is relayed by the AP to a controller (e.g., a WLAN controller within the network). The controller may control one or more access points. The request 60 may be similar in content (e.g., parameters), and the information it provides to the AP(s), to the request 48 (FIG. 5A). However, in this scenario, the controller responds with a configuration command 62 (CNFG CMD) to the AP, which transmits the configuration UL message 64 (CNFG UL, which is similar in content and effect to the configuration UL message 50 in FIG. 5A) based on the configuration command 62. In effect, instead of the AP-sourced configuration of the high-quality UL data transmission service as shown in FIG. 5A, the controller is the source of the configuration of this service. From there, the rounds of transmission are as similarly described in association with FIG. 5A, the discussion of which is omitted here to avoid obfuscating the relevant differences between FIG. 5A and FIG. 5B.

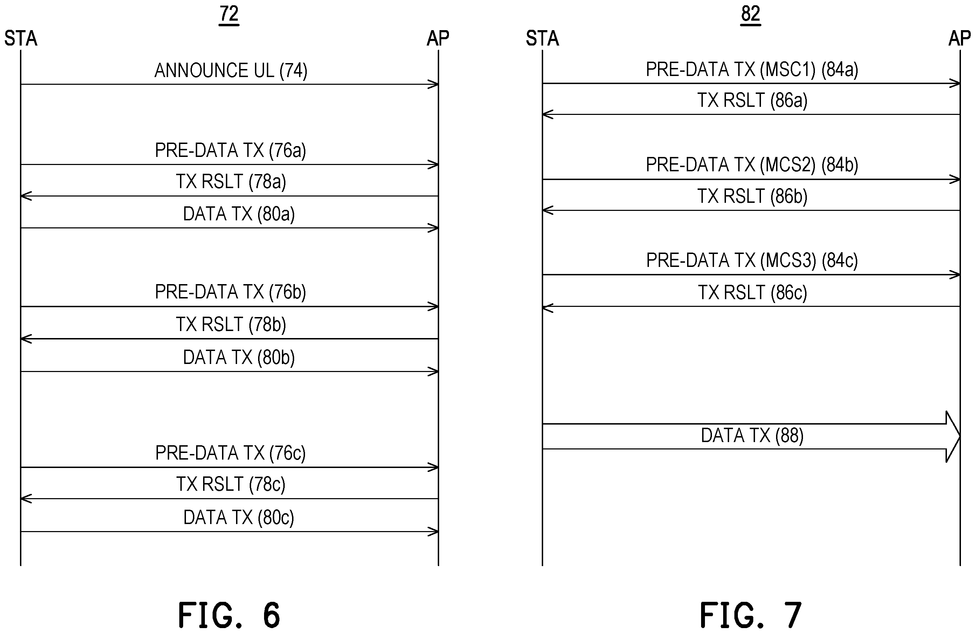

FIG. 6 shows an example signaling flow 72 for an example STA-controlled uplink (UL) data transmission using an embodiment of the two-phase rate adaptation method. The signaling flow 72 is similar to the signaling flow 36 of FIG. 4, except the arrow directions are all reversed. For instance, referring back to FIG. 4, the AP transmits the uplink data transmissions to the STA in the pre-data transmission (e.g., 40a) and data transmission (e.g., 44a) phases. In contrast, in FIG. 6, the STA transmits the uplink data transmissions to the AP in the pre-data transmission (e.g., 76a (PRE-DATA TX)) and data transmission (e.g., 80a (DATA TX)) phases. More specifically, the signaling flow 72 includes the STA sending to the AP the announcement of high-quality uplink data transmission services 74 (ANNOUNCE UL). The announcement 74 (e.g., control message), initiated by the STA, informs the AP that there will be 3 rounds of data transmissions, and other configuration information, such as (for each transmission round) the duration of the pre-data transmissions, the expected starting time of the data transmission phase, etc. Also, the STA is a decision maker (as to the configuration) in the signaling flow 72 of FIG. 6. Compare the signaling flow 72 to the signaling flow 46A of FIG. 5A, where the initiation of the announcement 48 is also from the STA, but the decision maker for the configuration is the AP (or in the signaling flow 46B of FIG. 5B, the decision maker for the configuration is the controller).

It bears noting that the knowledge of the data transmission pattern should be known to the STA. The STA is a generator of those data packets in this instance, and thus it already has knowledge. For instance, the STA may be a WLAN device that communicates with a notebook or a robot, and the notebook or robot provides important data every, say, 100 msec. Thus, the WLAN device (STA) has the knowledge of the data traffic pattern. The STA may also, or alternatively, obtain the data traffic pattern from preconfigured information, based on the application type in the packet header, based on the address of the destination node, based on the QoS type indicated in packet header, and/or from a configuration message that is sent by an application server.

The first round of transmissions includes the STA sending a set of test data packets during a pre-data transmission phase (phase1) 76a (PRE-DATA TX). The data transmission is expected to be generated at the STA in a set of pre-determined time points (with possibly some minor delay variations), such as periodic data traffic with a given period between two data packets. When a data packet P_i is expected to generate at STA at time t_i, the STA starts pre-data-transmission procedures before t_i. The starting time might be configured as (t_i - T_pre), where T_pre is a configurable parameter for the protocol operation. The STA may start channel access contention at (t_i - T_pre). If the channel contention is successful, the STA may become TXOP holder.

The STA may transmit one or more pre-data-transmission packets 76a, and a pre- data-transmission packet may be a data packet with a small dummy data payload, a data packet with an empty data payload, a Null packet (e.g., Null data PPDU), or a control packet that requests a channel state measurement (e.g., a sounding PPDU).

Upon receiving a pre-data-transmission, the AP may respond with a transmission result 78a (TX RSLT, which may include an ACK message and/or conduct channel measurement, or absence thereof), and report the channel state information to the STA. The AP may respond with an ACK with piggybacked channel state information feedback.

The STA performs rate adaptation based on 76a and 78a. For instance, upon receiving the ACK message or/and channel state information feedback from the AP, the STA may conduct link (e.g., rate) adaptation and select/re-select the proper transmission configuration (e.g., MCS, etc.).

The STA then transmits the application data packets to the AP 80a (DATA TX). The STA may transmit multiple pre-data-transmission packets until the number of transmitted pre-data-transmission packets is equal to an upper limit packet number, N_max, the time used for pre-data-transmission is greater than or equal to a time threshold, T_max, the application data, which is predicted to arrive at time t_i, has arrived at the STA WLAN radio interface, or the STA may (prematurely) terminate the pre-data-transmission phase and start the data transmission (e.g., pre-emption).

The two-phase rate adaptation method described above for the signaling flow 72 is repeated for the second transmission round (76b, 78b, and 80b) and the third transmission round (76c, 78c, and 80c). In comparison to the signaling flow 36 of FIG. 4, about the only difference between the signaling flow 36 of FIG. 4 and the signaling flow 72 of FIG. 6 is which entity initiates or is in control of the two-phase rate adaptation transmissions.

FIG. 7 shows an example signaling flow 82 for a pre-data transmission phase (phase 1) using plural, different MCS, followed by the data packet transmission phase (phase 2). Recall that FIGS. 4, 5A, 5B, and 6 illustrate that during the pre-transmission phase, empty (e.g., artificial or non-important) packets are sent out to the receiving device and an attempt or attempts are made to determine an improvement in the MCS, rate, etc. In other words, for each round, the MCS is adjusted based on the success of the transmissions (e.g., if the previous data is well received, then transmission may be made through a higher rate layer). By doing so, rate adaptation is performed earlier than in existing methods, which commence rate adaptation during the data transmission phase. In the embodiment shown in FIG. 7, there are multiple, consecutive sequences of pre-data transmissions, where each sequence uses a different MCS, prior to the data transmission phase. The MCS of each sequence may differ in, say, aggressiveness in rate, but the rate adaptation strategy is artificial - without regard to the channel conditions. For instance, if there is no ACK for one or more of the sequences, then during the data transmission phase, the MCS used may be more robust (e.g., due to evidence of poorer channel quality where fidelity of transmission may be improved with a slower rate, more robust transmission). On the other hand, if an ACK is received for each sequence, then the data transmission phase may use a transmission at a faster data rate. However, in each example described immediately above, the MCS used during the pre-data transmission phase does not necessarily consider the channel conditions, but rather, is pre-selected. The MCS chosen for MCS1 for instance may be considered too aggressive (or too robust) for the current channel conditions, but nevertheless, is attempted anyway. In that respect, the ordering of the MCS sequence may be somewhat randomly selected based on differences in robustness, rate, etc., or in some embodiments, may be pre-selected based on known features or historical performance (e.g., in a previous set of MCS sequences, a better performance was achieved using a particular ordering of the MCS sequences) and/or according to the type of wireless devices. For instance, the applied MCS sequences may be configured with a control message, determined based on the previous rate adaptation results, determined from most robust to least robust MCS (higher transmission rate), from a higher-rate MCS to a lower-rate MCS, or from the most likely MCS configuration.

In the example shown by the signaling flow 82 of FIG. 7, there is a first sequence in which the STA sends a pre-data transmission using a first MCS (MCS1) 84a (PRE-DATA TX (MCS1)), which elicits a transmission result 86a (e.g., TX RSLT, which includes an ACK and/or channel feedback or CSI information, or no response). In a next (consecutive) sequence, the STA sends a pre-data transmission using a second MCS (MCS2) 84b (PRE-DATA TX (MCS2)), which elicits a transmission result 86b (e.g., TX RSLT, ACK and/or channel feedback, or no response). For a third (consecutive) sequence, the STA sends a pre-data transmission using a third MCS (MCS3) 84c (PRE-DATA TX (MCS3)), which elicits a transmission result 86c (e.g., TX RSLT, which may include the presence or absence of an ACK and/or channel feedback). In this example, there is a preset (preset in type and order) of three (3) pre-data transmissions using a consecutive sequence of MCS1, 2, and 3, which in effect, is a series of tests (e.g., test 1 uses MCS1, test 2 uses MCS2, and test 3 uses MCS3, collectively amounting to pre-data transmission testing sequences). Based on the transmission results 86a, 86b, and 86c, a preferred (e.g., best) MCS transmission is selected for the data transmission phase 88. Note that the consecutive sequence involving MCS1, MCS2, and then MCS3 depicted in FIG. 7 is one example sequence for illustration, and that different ordering of the sequence or a different number of sequences may be used in some embodiments (e.g., MCS3, MCS2, then MCS1, or MCS1, MCS3, then MCS2, etc.). The feedback from the collective MCS sequences (e.g., the transmission results, whether channel measurements, or otherwise as described above) enables a determination of a suitable (e.g., best) MCS for the data transmission phase. Notably, the rate adaptation module used in the STA needs to be aware of this testing strategy since, should there be a poor transmission result for any given sequence (e.g., no ACK received, or a channel quality indicating that the MCS is a poor choice for the channel conditions), the rate adaptation module makes a decision based on the choice of the particular MCS rather than the channel condition.

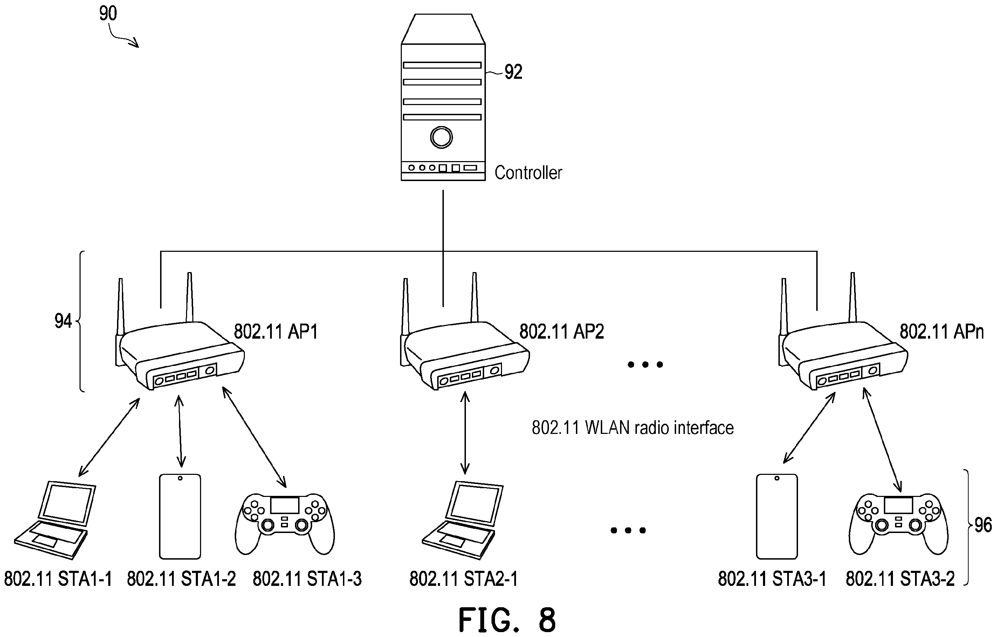

FIG. 8 shows an example communication system 90 in which various devices (e.g., WLAN devices and WLAN APs) may implement an embodiment of the two-phase rate adaptation method. Note that the communication system 90 is illustrative of one example system, and that variations in the arrangement and components may be implemented. The communication system 90 comprises one or more controllers 92 (one shown) that is connected (wired, such as via an Ethernet connection) to plural APs 94. The controller 92 may have a computer architecture, including one or more processors, memory, and a communication interface coupled to one or more busses. The APs 94 in turn are in wireless communication with one or more devices 96, which may include a STA as described above in association with the signaling flows depicted in FIGS. 4-7. The communication system 90 may be implemented in an office or area according to a mixed wired/wireless WLAN communication system, or a smart environment as described above. In some instances, the communication system 90 may be implemented in an office, factory, hospital, research facility, a home, or even a vehicle, as reflected by the types of devices 96 shown in the communication system 90.

The controller 92 may be standalone server or computer, or generally, computing device, or a network of controllers (e.g., a server farm, a cloud computing environment) that is co-located in a single facility or with functionality distributed among different locales. The APs 94 may also include one or a plurality of components, and may include WLAN APs (e.g., IEEE 802.11 AP), router, or devices providing, say, hot spot functionality (e.g., phone, notebook, etc.). Each of the APs 94 may be in wireless communication with one or more devices 96 (e.g., WLAN devices). The devices 96 may include a laptop, notebook, tablet, smartphone, and/or entertainment devices (e.g., game controllers), with 802.11 wireless communication capabilities (e.g., equipped with an 802.11 WLAN radio interface), among other example devices. In the example arrangement shown in FIG. 8, the AP 94 denoted as 802.11 AP is shown in wireless communication with plural devices 96 or stations (STAs), including a laptop (802.11 STA1 - 1), a smartphone (802.11 STA1-2) and a game controller (802.11 STA1-3). The AP 94 denoted as 802.11 APs is in wireless communication with a single device 96 (e.g., STA), namely a laptop (802.11 STA2-1). The AP 94 denoted as 802.11 APn (the n designating an integer number, which in this example is 3 or more) is shown in wireless communication with two devices 96 (a smartphone 802.11 STA3-1 and a game controller 802.11 STA3-2). Again, the arrangement and choice of components is merely illustrative of an example communication system 90, and a different quantity or type of components may be used as an environment in which certain embodiments of a two-phase rate adaptation method may be implemented.

FIG. 9 shows an example computational architecture for a wireless-capable device 98 used in the communication system 90 of FIG. 9. The wireless-capable device 98 may be a computational architecture for any of the AP 94 or device 96. The wireless-capable device 98 may include a (non-transitory) memory 100 (MEM), a processor 102 (e.g., PROC, such as a microprocessor or Application Specific Integrated Circuit (ASIC)), and a communication interface 104 (e.g., CMNC INT, such as an 802.11 WLAN radio interface). In some embodiments, there may be plural processors, or one or more multicore processors. The memory 100 may be any data storage device that may store a program code 106 (PRGM CODE), accessed and executed by the processor 102. Examples of the memory 100 include but are not limited to read-only memory, flash memory, random-access memory, hard disk, optical data storage device, non-volatile storage unit, non-transitory computer-readable medium (e.g., tangible media), etc. In one embodiment, the memory 100 is embodied as a non-transitory computer readable medium. The communication interface 104 may include a transceiver 110 (TRNCVR) that is used to transmit and receive signals (e.g., data, messages and/or packets) according to processing results of the processor 102. In one embodiment, the wireless-capable device 98 comprises a rate adaptation logic or module 108 (RA MOD), with may be software that is comprised of program code 106 (e.g., a device driver), or hardware or a combination of hardware and firmware that resides in the processor 102 (including individual chipsets), or a combination of both. The rate adaptation module 108 comprises the functionality of the two-phase rate adaptation method as described herein. In general, the rate adaptation module 108 performs the functionality involved with implementing the pre-data transmission phase (phase1) and the data transmission phase (phase2), including the configuration for rate adaptation (e.g., MCS selection or preselection (e.g., the latter as described in FIG. 8), rate, etc.) and parameter selection (e.g., for pre-data transmission, for data transmission, and packet quantity and size, arrival time prediction, etc., as described herein). In some embodiments, at least a portion of the functionality of the rate adaptation module 108 (e.g., for MCS selection) may be implemented in one or more tables with different setting configurations from which to choose.

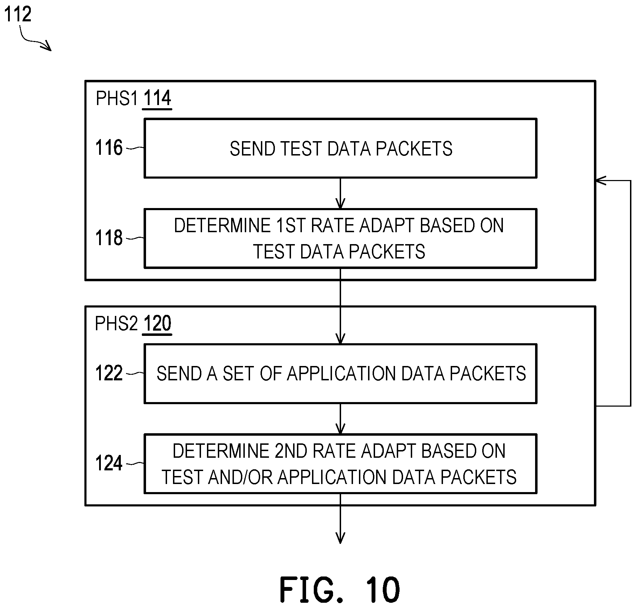

Having described certain embodiments of a two-phase rate adaptation method and an example wireless communication system 90 and wireless-capable device 98 in which the method may be implemented (see, e.g., FIGS. 1-9), it should be appreciated that one embodiment of an example two-phase rate adaptation method, or more generally, a method of configuring rate adaptation for data transmission 112, as shown in FIG. 10, comprises the following. For a first phase 114 (PHS1), the method comprises sending a set of test data packets (116), and determining a first rate adaptation configuration based on feedback corresponding to the sending of the set of test data packets (118). For a second phase (120) (PHS2), the method comprises sending a set of application data packets according to the first rate adaptation configuration (122), and determining a second rate adaptation configuration based on at least one of the sending of the set of test data packets or the set of application data packets (124).

## Claims

1. A method (112) of configuring rate adaptation for data transmission, **characterized in that** the method (112) comprises:
for a first phase (114, PHS1):
sending (16, 116) a set of test data packets; and
determining (118) a first rate adaptation configuration based on feedback corresponding to the sending (16, 116) of the set of test data packets;
for a second phase (120, PHS2):
sending (22, 122) a set of application data packets according to the first rate adaptation configuration; and
determining (124) a second rate adaptation configuration based on at least one of the sending (16, 116, 22, 122) of the set of test data packets or the set of application data packets.

2. The method of claim 1, further comprising determining (118, 124) the first or second rate adaptation configuration based on an expected or predictable data packet traffic pattern, wherein the expected or predictable data packet traffic pattern includes a periodic data traffic pattern.

3. The method of claim 2, further comprising receiving information about the predictable data packet traffic pattern based on receiving one or any combination of the following:
an application type in a packet header;
one or a combination of an address of a source node and an address of a destination node;
a Quality of Service (QoS) type in a packet header;
a configuration message sent by an application server; and
a configuration message sent by a Wireless Local Area Network (WLAN) controller.

4. The method of claim 2, further comprising receiving information about the predictable data packet traffic pattern based on one or any combination of the following:
setting a policy;
receiving a configuration message sent by a WLAN controller; and
receiving a control message from another device, the control message comprising one or any of the following:
a set of time points of an expected transmission;
an expected size of each data packet;
a period of periodic traffic flow;
a starting time of uplink data flow;
an ending time of downlink data flow; and
a number of data packets for a periodic data flow.

5. The method of claim 1, further comprising:
sending (16, 116) the set of test data packets according to a scheduled starting time and period, the scheduled starting time relative to an expected starting time for sending (22, 122) the set of application data packets, the expected starting time for sending (22, 122) the set of application data packets commencing at an end of the period, and commencing a channel access contention during the period,
wherein the scheduled starting time for sending (16, 116) the set of test data packets, and the period, are configurable parameters .

6. The method of claim 1, further comprising:
delaying the sending (16, 116) of the set of test data packets according to a scheduled starting time and period, the scheduled starting time relative to an expected starting time for sending (22, 122) the set of application data packets, wherein the delaying is based on a time period corresponding to a busy channel encroaching in part upon the period, the expected starting time for sending (22, 122) the set of application data packets commencing at an end of the period, and
commencing a channel access contention during the period,
wherein the scheduled starting time for sending (16, 116) the set of test data packets, and the period, are configurable parameters.

7. The method of claim 1, wherein the set of test data packets comprises one of the following:
a data packet with a dummy data payload or an empty payload;
a null packet; or
a control packet.

8. The method of claim 1, wherein the feedback comprises one or a combination of the following:
an ACK message from another device; and
channel state information from the another device.

9. The method of claim 1, further comprising determining (118, 124) the first and second rate adaptation configurations by selecting one or a combination of a modulation coding scheme, transmission rate, and Multiple Input, Multiple Output (MIMO) configuration.

10. The method of claim 1, further comprising sending multiple transmission rounds of both sets of test data packets and corresponding sets of application data packets up to one of an upper limit in number of sent packets, an elapsed time threshold, or based on receiving data corresponding to the sets of application data packets.

11. The method of claim 1, further comprising terminating the first phase (114, PHS1) prematurely based on receiving data corresponding to the set of application data packets before an expected starting time.

12. The method of claim 1, further comprising sending multiple transmission rounds of respective sets of test data packets, wherein the multiple transmission rounds include different modulation coding schemes sequenced according to one of previous rate adaptation results, from more robust to least robust, from higher rate to lower rate, or from most likely configuration, and further comprising determining (118) the first rate adaptation configuration based on feedback corresponding to the sending (16, 116) of the sets of test data packets corresponding to the multiple transmission rounds.

13. The method of claim 1, further comprising determining the set of test data packets according to one or any combination of number of test data packets per set, time gap between multiple test data packets, and size of each of the multiple test data packets.

14. The method of claim 1, wherein the first and second phases (114, PHS1, 120, PHS2) are implemented in one of an AP or STA, and further comprising configuring implementation details of the first rate adaptation and the second rate adaptation according to the first and second phases (114, PHS1, 120, PHS2) with or without a corresponding request for the rate adaptation according to the implementation details from another device.

15. A wireless-capable device (98) comprising:
a transceiver (110);
a memory (100) comprising program code (106); and
a processor (102), coupled to the transceiver (110) and the memory (100), and **characterized in that** the processor (102) is configured to execute the program code (106) to:
for a first phase (114, PHS1):
send (16, 116) a set of test data packets; and
determine (118) a first rate adaptation configuration based on feedback corresponding to the sending (16, 116) of the set of test data packets;
for a second phase (120, PHS2):
send (22, 122) at least a set of application data packets according to the first rate adaptation configuration; and
determine a second rate adaptation configuration based on at least one of the sending (16, 116, 22, 122) of the set of test data packets or the set of application data packets.
